# EUROPEAN PATENT SPECIFICATION

(11) **EP 2 230 511 B1**
(45) Date of publication and mention of the grant of the patent: **26.04.2017**
(21) Application number: 09305252.0
(22) Date of filing: 20.03.2009
(51) Int. Cl.: B01D 67/00, G01N 33/487, B01D 69/10, B01D 61/02

(54) **Method for varying the diameter of a nanopore contained in a nanoporous membrane functionalised with a ph-dependent polyelectrolyte**
Methode zum Ändern des Durchmessers einer sich in einer nanoporösen Membran befindenden Nanopore, die mit einem pH-abhängigen Polyelektrolyten funktionalisiert ist
Methode de varier le diamètre d'un nanopore d'une membrane nanoporeuse fonctionnalisée avec un polyélectrolyte dépendant du pH

(43) Date of publication of application: 22.09.2010
(73) Proprietor: Ecole Polytechnique, 91128 Palaiseau Cedex (FR); Centre National de la Recherche Scientifique (C.N.R.S.), 75016 Paris (FR); Commissariat à l'Énergie Atomique et aux Énergies Alternatives, 75015 Paris (FR)
(72) Inventor: Wade, Travis Lee, 75015 PARIS (FR); Clochard, Marie-Claude Laurence, 78500 SARTROUVILLE (FR)
(74) Representative: Pontet Allano & Associes

(56) References cited:
- EP-A- 1 441 213
- WO-A-2005/033685
- WO-A-2007/140252
- WO-A1-2009/147244
- US-A1- 2008 025 875
- CUSCITO ET AL: "Nanoporous beta-PVDF membranes with selectively functionalized pores" NUCLEAR INSTRUMENTS & METHODS IN PHYSICS RESEARCH, SECTION - B:BEAM INTERACTIONS WITH MATERIALS AND ATOMS, ELSEVIER, AMSTERDAM, NL, vol. 265, no. 1, 17 November 2007 (2007-11-17), pages 309-313, XP022349433 ISSN: 0168-583X
- YOSHIHIRO ITO ET AL: "Signal-responsive gating by a polyelectrolyte pelage on a nanoporous membrane" NANOTECHNOLOGY, IOP, BRISTOL, GB, vol. 9, no. 3, 1 September 1998 (1998-09-01), pages 205-207, XP020067153 ISSN: 0957-4484

## Description

The present invention relates to methods for varying the diameter of pores in nanoporous membranes, and more particularly to a novel arrangement for controlling the diameter of nanopores realised inside nanoporous polymeric membranes.

Because of its excellent mechanical and physicochemical properties, poly(vinylidene fluoride) (PVDF) has found wide-spread industrial applications and research interest since the 1960s. Especially, PVDF membranes are produced for separation and filtration. Often, these membranes are chemically and/or physically modified in order to match specific applications, e.g. ionexchange membranes. As such, hydrophilic PVDF membranes have been studied and applied for non-conventional fields such as drug delivery.

The document "Tailoring bulk and surface grafting of poly(acrylic acid) in electron-irradiated PVDF", M.-Cl. Clochard et al, Polymer 45 (Nov2004) 8683-8694, discloses a process to endow hydrophobic membranes with hydrophilic properties using electron beam irradiation. Several parameters governing the structure and morphology of PVDF-g-PAA films have been determined and technique for specially grafting-through and/or surface-grafting is disclosed.

Numerous processes for the synthesis of nanoporous polymeric membranes exist. One of them, called track etched technique, uses swift heavy ion irradiation.

The document "grafting of acrylic acid on etched latent tracks induced by swift heavy ions on polypropylene films", Mazzei et al., Nuclear Instruments and Methods in Physics Research B 266 (march 2008) 3170-3173, describes a systematic study of the grafting process on nuclear tracks that involves different polymers and monomers. This document concerns a stack of foils irradiated by swift heavy ions. The irradiation step leads to the formation of the so-called latent tracks. The etching procedure removes active sites of the latent tracks thus producing pores of different length and diameter. Active sites remaining after the etching procedure were used to graft acrylic acid (AA) on the tracks. This document discloses the fact that the effective diameter of the pores evolves as a function of pH solution during grafting procedure.

The document US 2006/0163071, Siwy et al., describes a nanodevice, such as a polymeric foil, for controlling the flow of charged particles in electrolytes. This document describes an electrolytic bath container divided by a polymeric foil into a first and second compartments. Each compartment comprises an electrode connected to a voltage supply. The nanodevice comprises an asymmetric pore forming a hole through said foil. An electrically conductive layer surrounds the narrow opening of the pore. An electric potential is thus created inside the pore and allows controlling ionic current through the pore. This system is limited to a container which is hermetically divided in two compartments. The electrodes are used to directly control the charged particles in electrolytes.

The document "Signal-responsive gating by a polyelectrolyte pelage on a nanoporous membrane", Yoshihiro Ito, Nanotechnology 9 (1998) 205-207, discloses the diameter dependency of a radio-grafted nanoporous membrane functionalized with a pH-dependent polyelectrolyte by externally changing the pH of the solution. No application of a potential is disclosed in order to vary the diameter by electrolysing water in order to create hydronium ions.

US 2008/0025875 discloses a biosensor comprising a radio-grafted nanoporous membrane functionalized with a pH-dependent polyelectrolyte.The polyelectrolyte is used as a lining-material to tailor the shape of the pore for the analyte to be detected.

WO 2007/140252 discloses radio-grafted nanoporous membranes functionalized with a pH-depedent polyelectrolyte for protective clothing. An object of the present invention is to control the effective diameter of pores inside a membrane. Further, it is an object of the present invention to create a nano valve that can be opened and closed at will.

The present invention is a method according to claim 1 A polyelectrolyte is a macromolecular substance, which has the power to dissociate when dissolved in water or in any other ionizing medium, to give at least one ion. In other words, a polyelectrolyte is a polymer containing at least one ionisable monomer.

In particular, the polyelectrolyte can give polyions, such as polyanions, when dissociated in water. A polyelectrolyte can be a polyacid, a polybasic, a polysalt or polyampholytes (contain both acidic (cationic) and basic (anionic) functional groups). In the present invention, it is preferably a polyacid and preferably a strong polyacid. In general, a polyelectrolyte according to the invention is a pH dependent polymer.

Preferably, the functionalised radio-grafted track-etched membrane FRTEM is based on a poly(vinylidenefluoride) PVDF film, and the polyelectrolyte is polyacrylic acid PAA. In other words, in the presence of vinyl monomer, such as acrylic acid (AA), a radical polymerization takes place by radio grafting process to specifically functionalise the nanopore wall with hydrogel.

In other words, the structure of the polyelectrolyte, as the polyacrylic acid (PAA), depends on pH. It is hydrophobic when it is in the protonated form, low pH, and hydrophlic in the deprotonated form, high pH. The pH can be changed near an electrode surface due to the electrolysis of water. Negative voltages reduce protons (H⁺) at the electrode surface which results in an increase in pH. Positive voltages can oxidize or break H₂O into O₂ and H⁺ at the electrode surface, decrease in pH. If PAA is near an electrode (within a few microns, ~10 microns) the form of its structure can be changed by pH changes near the electrode due to electrolysis. This can be used to switch the PAA in the pores of functionalised radio grafted track-etched membranes (FRTEM) between the hydrophylic phase and the hydrophobic phase by applying a voltage to electrodes. This is useful as a device for the separation and analysis of protein residues. This effect could also be exploited to make nanovalves for micro and nanofluidics or as variable diameter nanofilters.

The device according to the invention can be used as a bistable nanovalve that behaves as a switch, or it can be used as a progressive nanovalve by progressively changing the diameter of the nanopore.

The device according to the invention acts on acrylic acid grafted on the nanopore wall in order to change the diameter of said nanopore. On the contrary, document US 2006/0163071 acts directly on the charged particles without changing the diameter of the pore.

Preferably, the polymer nanopores consist of tubules through the entire thickness of the functionalised radio-grafted track-etched membrane. The membrane could be in a shape of a cylinder or parallelepiped in which tubules are all parallel and perpendicular to two opposite sides of the membrane. The thickness of the membrane could substantially be of 9 µm and the nanopores could present a diameter between 20 and 100 nm. Moreover, each side of the membrane could present à diameter of substantially 400mm².

Advantageously, nanoporous membranes according to the present invention have better diffusion profiles than porous sponge like films due to 2D diffusion as opposed to 3D diffusion, such as glassy carbon, and an uniform distribution of pore diameter and length.

In preferred embodiment, the membrane is specifically grafted inside the nanopores. The synthesis of functionalized radio grafted membranes comprises notably steps of irradiation to activate radicals, chemical etching and radiografting. The remanence of radicals within the nanopore walls after etching allows to radio graft specifically inside the nanopores and not the membrane surface.

According to an example:
- one of said two electrodes is a surface electrode arranged on one side of the functionalised radio-grafted track-etched membrane FRTEM, said surface electrode comprising an aperture so that the nanopore remains open,
- the other electrode is disposed in the same solution as the functionalised radio-grafted track-etched membrane FRTEM, for example at opposite side of the surface electrode.

The two electrodes can be connected to a single voltage generator.

In general, each surface electrode may be a sputtered metallic layer that enters the nanopores some hundreds of nm.

According to another example:
- one of said two electrodes is composed of two surface electrodes respectively arranged on each side of the functionalised radio-grafted track-etched membrane FRTEM perpendicularly with respect to the nanopore, each surface electrode comprising an aperture so that the nanopore remains open, said two surface electrodes being connected together;
- the other electrode is disposed next to, contactless, the functionalised radio-grafted track-etched membrane FRTEM.

According to another rexample, the two electrodes are two surface electrodes respectively arranged on each side of the functionalised radio-grafted track-etched membrane FRTEM perpendicularly with respect to the longitudinal axis of the nanopore, each surface electrode comprising an aperture so that the nanopore remains open.

According to an example, the nanoporous device comprises:
- a plurality of nanopores, and
- said at least two electrodes comprises a plurality of independent surface electrodes arranged on one side of the functionalised radio-grafted track-etched membrane FRTEM, each surface electrode being associated with a nanopore and comprising an aperture so that the associated nanopore remains open;
- said at least two electrodes further comprises at least another electrode disposed next to the functionalised radio-grafted track-etched membrane FRTEM at opposite sides of the surface electrodes, each surface electrode providing an independent potential difference with respect to said at least another electrode.

Advantageously, the potential difference between said at least two electrodes is obtained by means of a potentiostat or power supply. The voltage can be variable inside a range of +/- ~1.5 volts.

For the purpose of illustrating the invention, there is shown in the drawings a form that is presently preferred; it being understood, however, that this invention is not limited to the precise arrangements and instrumentalities.
Figure 1 is a schematic view illustrating Track-etch process: I) swift heavy Ions irradiation forms damaged zones in the polymer bulk along the ion pathway called latent tracks, II) the latent tracks are chemically etched forming nanopore of biconical shape at the early stage and III) if the track etch rate is sufficiently higher than the bulk etch rate, biconical nanopores become cylindrical;
Figure 2 is a graph illustrating the electron paramagnetic resonance (EPR) spectra per mass unit (mg-1) for a heavy ion irradiated film;
Figure 3 is a graph illustrating the radical decay from EPR results versus time;
Figure 4 is a graph illustrating a FTIR spectra of swift heavy ion 58Ni25+ irradiated PVDF-g-PAA for different etching times (AA concentration 100% v/v, fluence 109cm-2, Mohr's salt 0.25% w/w, radiografting at 60°C for 1 hour); the maximum corresponds to O-C=O stretching (1701 cm-1) and gives evidence of COOH groups radiografted PAA chains;
Figure 5 is a schematic view of a membrane cut in order to view nanopore walls;
Figure 6 shows a schematic cut-away side view of a membrane with gold electrodes on top and bottom sides;
Figure 7 shows a perspective view of the membrane of figure 6;
Figures 8-10 are schematic views illustrating the fixing of the membrane into a membrane-holder;
Figures 11a and 11b show a variable diameter nanoporous device according to the invention immersed in an aqueous solution and controlled by a voltage generator,
Figures 12a and 12b are schematic top views of the pH response of a polyacrylic acid (PAA) FRTEM pore,
Figures 13a and 13b are schematic cut views of the pH response of a PAA FRTEM pore,
Figures 14a and 14b are schematic cut views of the pH response of the structure of a PAA inside a pore,
Figures 15a, 15b and 15c show a hydrophilic chromatography in which the polyacrylic acid (PAA) varies from hydrophilic phase to hydrophobic phase,
Figures 16a and 16b show a variable diameter nanoporous device according to the invention with a both sides metalized FRTEM by a same electrode, during hydrophilic phase (Fig 16a) and hydrophobic phase (Fig 16b),
Figure 17 shows a variable diameter nanoporous device according to an example with a both sides metalized FRTEM by respectively two electrodes each at a different voltage,
Figure 18 shows a membrane with nine independent electrodes.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

In accordance with the preferred embodiment, the method and device according to the invention relates to the following materials and processes:
**Materials:** Poly(vinylidenefluoride) (PVDF) films of 9 µm thickness provided by PiezoTech SA®, Saint Louis (France). Toluene, potassium hydroxide, potassium permanganate, potassium disulfite, acrylic acid (AA), Mohr's salt ((NH₄)₂Fe(SO₄)₂.6H₂O), sulphuric acid, EDC (C₈H₁₇N₃HCl), phosphate buffer saline (PBS), tBuOK (C₄H₉OK 95%) purchased from Sigma-Aldrich®, and Alexa Fluor R 488 hydrazide (C₂₁H₁₅N₄NaO₁₀S₂) purchased from Invitrogen®.
**Irradiation**: Prior to irradiation, PVDF films are toluene-extracted for 24 h. Swift heavy ion irradiation was performed at the GANIL, Caen (France). Films are irradiated with Kr ions (10.37 MeV/amu, fluence 107 to 10¹⁰ cm⁻²) under He atmosphere. In two cases, samples are stored at -20°C under N₂ atmosphere until chemical etching and radio grafting.
**Chemical etching:** PVDF irradiated films are chemically etched using permanganate solution (0.25 M) in a highly alkaline medium (KOH 10 M) at 65°C with different etching times from 0.5 to 3 h. Membranes obtained are washed in potassium disulfide solution (15%) then dried at 50°C under vacuum.
**Radio grafting:** PVDF films of initial size 20x20 mm², are weighed. The film was immersed at room temperature in a radio grafting solution containing acrylic acid and Mohr's salt (0.25%w/w). After 15 minutes of bubbling nitrogen at room temperature, the sample was introduced into a thermostated water bath at 60°C for 1 hour. Membranes are washed with water and then Soxhlet-extracted in boiling water in order to extract free homopolymer. Functionalised membranes are dried at 50°C under vacuum.
**Infra-red spectroscopy:** FTIR spectra of PVDF films are obtained with a Nicolet Magna-IR 750 spectrometer equipped with a DGTS detector. Spectra are recorded in an attenuated total reflection mode (ATR) using a diamond-crystal with single reflection. Spectra are collected by accumulating 32 scans at a resolution of 2 cm⁻².
**Confocal Scanning Laser Microscopy (CSLM):** Measurements are performed at LLB (CEA-Saclay, France) with a Leica TCS-SP2 using an Ar laser (488 nm). Samples are observed in water with a 40x dry objective of numerical aperature 0.85.
**Electrode fabrication:** the gold layers, ~45nm are sputtered (EMITECH K550, UK) through a mask with 3 mm diameter holes.

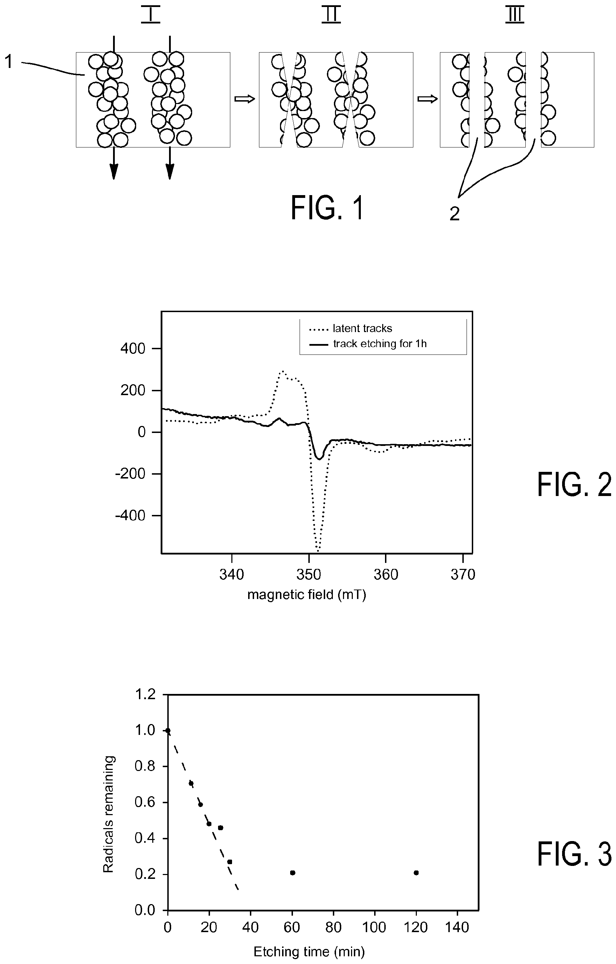

The synthesis of functionalized radio grafted membranes is described according to figures 1-4. With respect to figure 1, a track-etch process is described. This process comprises three steps:
I) latent track formation along the ion pathway through a polymer film 1,
II) symmetrical attack of latent tracks by hydrolysis at early stage of the process, and
III) formation of cylindrical pores 2.

In other words, for the preparation of a functionalised radio grafted track-etched membrane 3 (FRTEM), polymer film 1 is first bombarded by switft heavy ions and the formed tracks along the ion passage are revealed under alkaline chemical treatment.

The obtained nanoporous polymer membrane 3 does not need to undergo a subsequent e-beam irradiation to increase radical proportion in polymer bulk submicronic pore diameter. Indeed, after etching times inferior to one hour, the radical residues within nanopore walls were found sufficiently numerous to persue a radiografting from the pore walls 2.

Figure 2 shows an electron paramagnetic resonance (EPR) spectra per mass unit (mg-1) for a heavy ion irradiated film before etching (latent tracks) and after 1 hour of track etching. In the latter case, the non-horizontal baseline is due to paramagnetic impurities (KMnO4 from the etching bath). Figure 3 shows the radical decay from EPR results versus time. Radicals are always presents even after 1 hour of track etching.

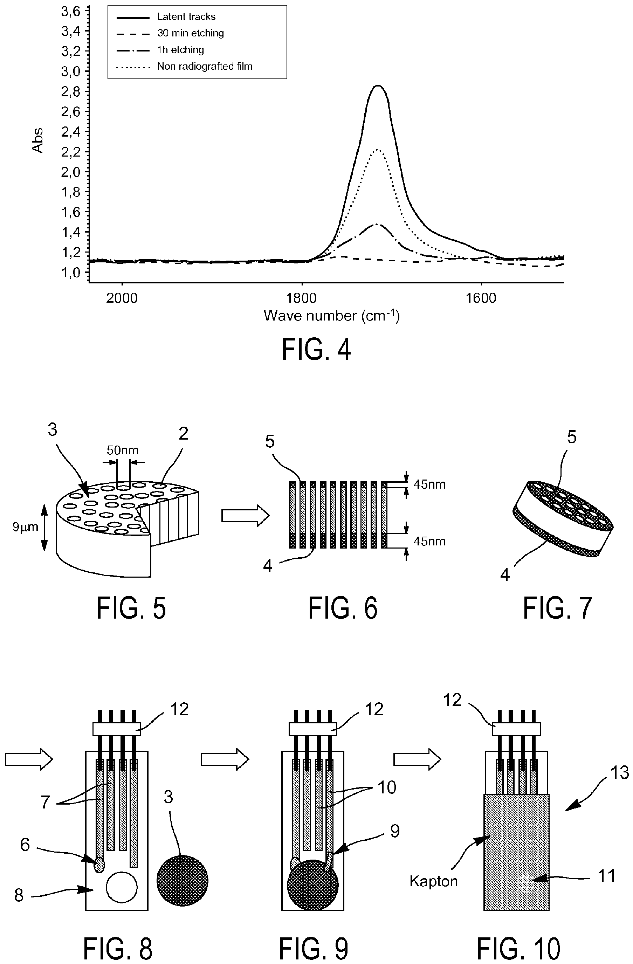

Concerning the functionalisation, in the presence of vinyl monomer, such as acrylic acid (AA), a radical polymerization takes place by radio grafting process to specifically functionalise the nanopore walls with carboxylate hydrogel as shown from FTIR spectra in figure 4. This polymerization is specific to the nanopore walls and does not occur on the membrane surface. The selectivity of the grafting is checked by labelling of the amine functionalised surface of the PVDF nanoporous membrane by a fluorescent probe specific to the amines and the poly(acrylic acid) inside the pores by a second fluorescent probe specific to the acid groups.

Figures 5-10 describe a non limitative embodiment of a both sides metalized membrane. A nanoporous device 13 is shown. The nanosensor is based on the membrane 3, the shape of which is a cylinder of 9µm thick and of 400 mm² diameter, with 10⁶ to 10¹⁰ nanopores per cm² of 50 nm diameter. Once the membrane has been functionalised, gold is sputtered on each side of the membrane 3 in figure 6 : a bottom electrode 4 of 45nm thick and a top electrode 5 of 45nm thick. The sputtering is made as known by one ordinarily skilled in the art, in such a way that the nanopores remain open. The gold layers can cover or not the entire surface. On figure 7 the perspective view of the membrane shows the top electrode 5 and the bottom electrode 4. On figures 8-10, the bottom layer 4 is contacted with silver paste 6 to copper contacts 7 lithographically patterned on 1.5 cm² plexiglass plackets 8. The top layer 5 is contacted with a gold wire 9 and silver paste to other copper contacts 10 on the same placket 8. The membrane 3 is then covered with waterproof tape, Kapton, 3M, except for a 2 mm diameter circular area 11 in the centre of the membrane, which will serve as a window for exposure of the membrane to the aqueous solution. The copper leads are not completely covered by the tape and remain outside of the solution so they can be connected to a potentiostat via a bridge 12.

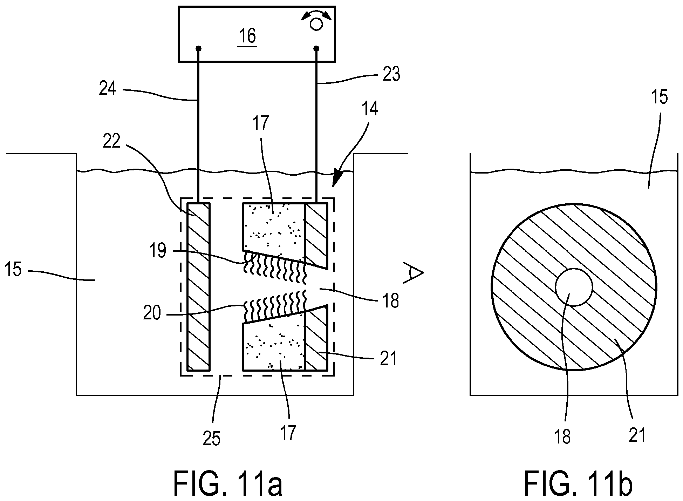

Figures 11a is a cut view illustrating a variable diameter nanoporous device 14 immersed in an aqueous solution (water) 15 and controlled by a potentiostat or a voltage generator 16. The variable diameter nanoporous device 14 comprises a PVDF membrane 17 radiografted with polyacrylic acid PAA 20 (PAA FRTEM) inside the nanopore 18. More precisely, said nanopore 18 consists in a conical tubule through the entire thickness of the PVDF membrane 17 with pH sensitive polyacrylic acid hydrogel attached to the nanopore wall 19. For drawing simplicity, only a single nanopore is represented, but the PVDF membrane 17 may include several nanopores arranged as a matrix or not. A gold layer is directly sputtered on a side (see figure 11b) of the PVDF membrane 17 in order to form a surface electrode 21. Figure 11b is a top view of a part of device 14. It is shown that the surface electrode 21 covers the disk-shaped PVDF membrane 17. As known by a person skilled in the art, gold is sputtered in such a way that the nanopore apertures on both sides remain open. A counter electrode 22 is also immersed in the aqueous solution 15 next to, but not in contact with, the PVDF membrane 17 at opposite side of the surface electrode 21. The counter electrode 22 is a metallic or gold disk arranged parallel to the surface of the PVDF membrane. For example, the conical nanopore 18 is disposed with the large aperture facing the reference membrane.

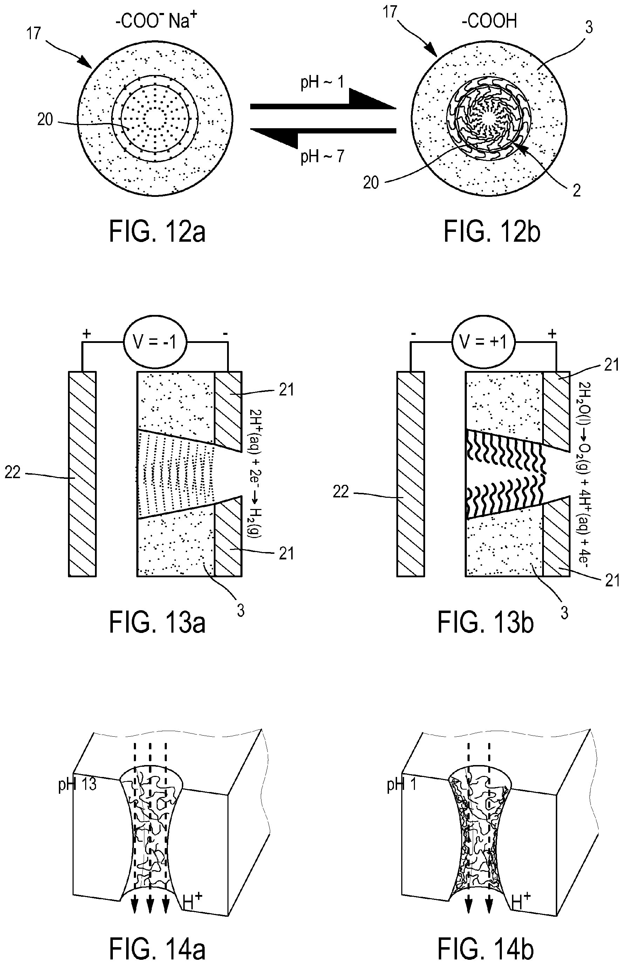

The surface electrode 21 is connected to an output of the voltage generator 16 via wire 23. The counter electrode 22 is connected to a cathode output of the voltage generator 16 via wire 34. The voltage generator 16 provides a potential difference between the counter electrode 22 and surface electrode 21. This potential difference is variable for example between -1 (minus one) and +1. The voltage generator 16 provides automatically or not a variable potential difference which results in a variation of the pH of the aqueous solution within a few microns of the electrode 21 and 22. The nanopore 18 is contained in the region 25 which is within a few microns of the electrode. Advantageously, the variation of the pH causes a reversible phase change in the polyacrylic acid between a hydrophobic phase and a hydrophilic phase as shown on figures 12-14.

Figures 12a, 12b, and 13a, 13b, respectively, show how the structure of polyacrylic acid (PAA) 20 depends on pH. It is hydrophobic in the protonated form (Fig 12b), low pH, and hydrophilic in the deprotonated form(Fig 12a), high pH. The pH is changed near the electrode surface 21 due to the electrolysis of water. This can be used to expand or contract PAA 20 radiografted in the nanopore 18 (figure 11) of the PAA FRTEM 17 to open and to close the nanopore or change their effective pore diameter or hydrophilicty by applying a voltage to the surface electrode 21. Figures 13a and 13b illustrate a side view of the PAA FRTEM 17 of figure 12.

The hydrophilic phase (Fig 13a) is obtained with a pH around 7.4 for a potential difference V=-1 volt, the anode being connected to the surface electrode 21 which is connected to a PAA FRTEM surface. Electrolysis of water occurs near the surface electrode 21 as follows:

2H⁺(aq) + 2e⁻ → -H₂(g)

The hydrophobic phase (Fig 13b) is obtained with a pH around 1.4 for a potential difference V=+1 volt, the cathode of the voltage generator 16 being connected to the reference electrode 22. Electrolysis of water occurs near the surface electrode 21 as follows:

2H₂O(I) → O₂(g) + 4H⁺(aq) + 4e⁻

Figures 14a and 14b show how the structure of polyacrylic acid (PAA) depends on pH inside a biconical nanopore. During the hydrophilic phase (Fig 14a), at pH 13, carboxylic acids of PAA are totally dissociated. The resulting electrostatic repulsions swell the PAA chains. The nanopore becomes permeable and favours ion diffusion. Reversely, during hydrophobic phase (Fig 14b), at acidic pH 1, the collapse of radiografted PAA chains inside the nanopore causes a dense PAA layer on the nanopore wall reducing any ion flow stream through the nanopore.

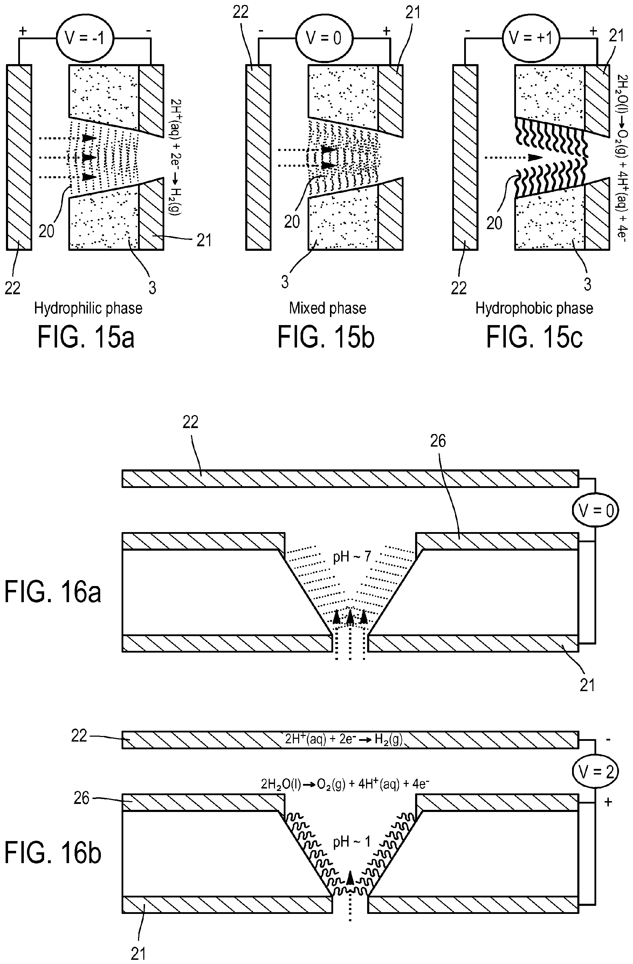

Figure 15 shows a hydrophylic chromatography which is possible by scanning the surface electrode potential, resulting in a separation of species based on their hydrophilicty. For a potential V=0, the PAA FRTEM presents a mixed phase. This could be used in protein analysis.

The nanoporous device is a new way to make switchable hydrophilic nanoporous seperation devices for protein analysis and nanoscale valves.

Figure 16 shows the use of a second surface electrode 26 at opposite side of the first surface electrode 21, but both being connected together. The both sides of the PAA FRTEM are at the same potential. At high pH, it is easier for ions to pass through the nanopore but difficult for hydrophobic species to pass. At low pH, it is difficult for ions to pass but easy for hydrophobic species to pass.

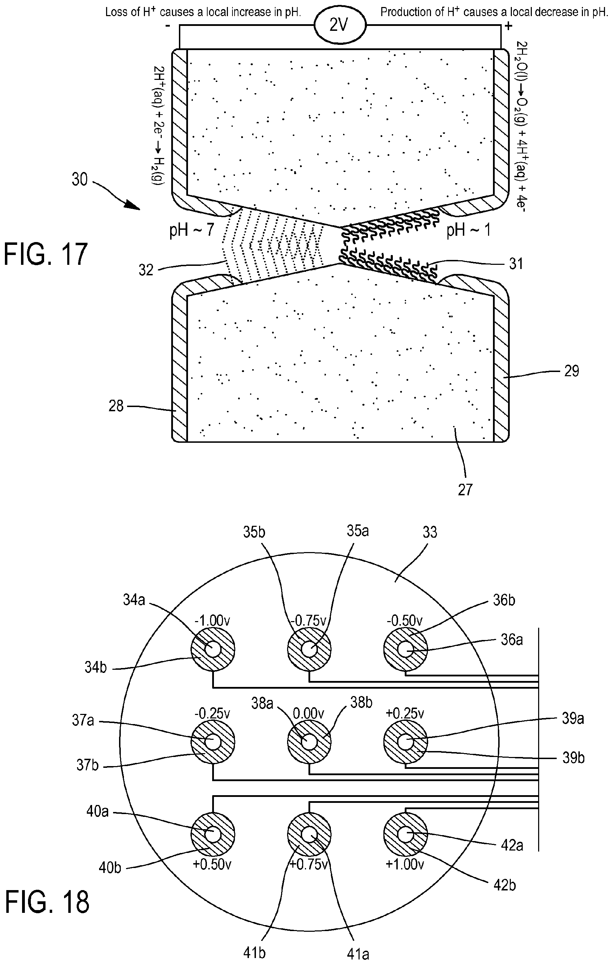

Referring now to figure 17, a variable diameter nanoporous device is shown with a both sides metalized PAA FRTEM 27. The nanopore 30 has a biconical shape and is radiografted with polyacrylic acid (PAA) hydrogel. A surface electrode 28, 29 is realized on each lateral side of the PAA FRTEM 27. The two surface electrodes are at different potential. For each surface electrode 28, 29, the sputtered gold layer enters the nanopore 30 from 100nm to 500nm depending on nanopre shape and diameter. This embodiment with both sides metalized PAA FRTEM enhances the control of the PAA structure.

For a positive potential difference, for example +2V, between the surface electrode 29 with respect to the surface electrode 28, the production of H⁺ at surface electrode 29 side causes a local decrease in pH. The PAA 31, at surface electrode 29 side, is in hydrophobic condensed phase. Reversely, the loss of H⁺ at surface electrode 28 side causes a local increase in pH. The PAA 32, at surface electrode 28 side, is in hydrophilic swollen phase.

According to another example, there is provided on figure 18 a PAA FRTEM 33 for hydrophilic separations. This PAA FRTEM comprises nine independent nanopores 34a-42a with nine independent corresponding surface electrodes 34b-42b deposited through a mask. Each surface electrode can be contacted to a voltage. With this configuration the hydrophobicity of the PAA FRTEM at each surface electrode can be independently controlled. This allows the parallel analysis or separation of species based on their hydrophobicity.

The nanoporous device enables one to change the hydrophobicity of nanopores in nanoporous membranes by applying a voltage to the membrane while the membrane is in solution. This may have applications for hydrophilic analysis of proteins and as filters.

Numerous variations and modifications will become apparent to those skilled in the art once the above disclosure is fully appreciated. It is intended that the following claims be interpreted to embrace all such variations and modifications.

## Claims

1. Method for varying a diameter of a nanopore (18) contained in a functionalised radio-grafted track-etched membrane (3,17), said nanopore being radio-grafted with a pH dependent polyelectrolyte (20) said method comprising the steps of:
- placing the functionalised radio-grafted track-etched membrane in an aqueous solvent solution (15), said functionalised radio-grafted track-etched membrane comprising a surface electrode (21) realized on at least one side, said surface electrode comprising an aperture so that the nanopore remains open,
- placing another electrode (22) in the solution, next to, contactless, the functionalised radio-grafted track-etched membrane,
- applying a variable potential difference in the solution by using the two electrodes, the effective diameter of the nanopore varying as the hydrophobicity of the polyelectrolyte changes as a function of the potential difference, the hydrophobicity being changed by a pH-change due to the electrolysis of water.

2. Method according to claim 1, **characterised in that** the functionalised radio-grafted track-etched membrane is used for the separation and analysis of protein residues.

3. Method according to claim 1, **characterised in that** the functionalised radio-grafted track-etched membrane is used as nanovalves for micro and nanofluidics.

4. Method according to claim 1, **characterised in that** the functionalised radio-grafted track-etched membrane is used as variable diameter nanofilters.

5. Method according to any of preceding claims, **characterised in that** it comprises a step of varying the voltage inside a range less than five volts.

6. Method according to any of preceding claims, **characterised in that** the hydrophobicity change is reversible with the variable potential difference.

## Patentansprüche

1. Verfahren zum Ändern eines Durchmessers einer sich in einer funktionalisierten, strahleninduziert gepfropften Spur-geätzten Membran (Kernspurmembran) (3, 17) befindenden Nanopore (18), wobei die Nanopore mit einem pHabhängigen Polyelektrolyt (20) strahleninduziert gepfropft wird und das Verfahren die Schritte aufweist:
- Platzieren der funktionalisierten, strahleninduziert gepfropften Kernspurmembran in eine wässrige Lösemittellösung (15), wobei die funktionalisierte, strahleninduziert gepfropfte Kernspurmembran eine auf zumindest einer Seite ausgebildete Oberflächenelektrode (21) aufweist, wobei die Oberflächenelektrode eine Öffnung aufweist, so dass die Nanopore geöffnet bleibt,
- Platzieren einer weiteren Elektrode (22) neben, aber ohne Kontakt mit der funktionalisierten, strahleninduziert gepfropften Kernspurmembran in der Lösung,
- Aufbringen einer veränderlichen Potentialdifferenz in der Lösung durch Nutzung der beiden Elektroden, wobei der effektive Durchmesser der Nanopore sich ändert mit der Änderung der Hydrophobizität des Polyelektrolyts als Funktion der Potentialdifferenz, wobei die Hydrophobizität durch eine pH-Änderung infolge der Elektrolyse des Wassers verändert wird.

2. Verfahren nach Anspruch 1, **dadurch gekennzeichnet, dass** die funktionalisierte, strahleninduziert gepfropfte Kernspurmembran zur Trennung und Analyse von Proteinrückständen genutzt wird.

3. Verfahren nach Anspruch 1, **dadurch gekennzeichnet, dass** die funktionalisierte, strahleninduziert gepfropfte Kernspurmembran als ein Nanoventil für Mikro- oder Nanofluidik genutzt wird.

4. Verfahren nach Anspruch 1, **dadurch gekennzeichnet, dass** die funktionalisierte, strahleninduziert gepfropfte Kernspurmembran als ein in seinem Durchmesser veränderlicher Nanofilter genutzt wird.

5. Verfahren nach einem der voranstehenden Ansprüche, **dadurch gekennzeichnet, dass** es einen Schritt zur Änderung der Spannung innerhalb eines Bereichs von weniger als 5 Volt aufweist.

6. Verfahren nach einem der voranstehenden Ansprüche, **dadurch gekennzeichnet, dass** die Änderung der Hydrophobizität mittels der veränderlichen Potentialdifferenz umkehrbar ist.

## Revendications

1. Méthode permettant de faire varier le diamètre d'un nanopore (18) contenu dans une membrane « track-etched » fonctionnalisée par radiogreffage (3, 17), ledit nanopore étant radiogreffé avec un polyélectrolyte dépendant du pH (20)
ladite méthode comprenant les étapes qui consistent à :
- placer la membrane « track-etched » fonctionnalisée par radiogreffage dans une solution solvante aqueuse (15), ladite membrane « track-etched » fonctionnalisée par radiogreffage comprenant une électrode de surface (21) réalisée sur au moins une face, ladite électrode de surface comprenant une ouverture telle que le nanopore demeure ouvert,
- placer une autre électrode (22) dans la solution à proximité de la membrane « track-etched » fonctionnalisée par radiogreffage mais sans contact avec celle-ci,
- appliquer une différence de potentiel variable dans la solution en utilisant les deux électrodes, le diamètre efficace du nanopore variant au fur et à mesure que l'hydrophobie du polyélectrolyte change en fonction de la différence de potentiel, l'hydrophobie étant modifiée par un changement du pH dû à l'électrolyse de l'eau.

2. Méthode selon la revendication 1, **caractérisée en ce que** la membrane « track-etched » fonctionnalisée par radiogreffage est utilisée pour la séparation et l'analyse de résidus protéiques.

3. Méthode selon la revendication 1, **caractérisée en ce que** la membrane « track-etched » fonctionnalisée par radiogreffage est utilisée comme nanovalves en micro-et nanofluidique.

4. Méthode selon la revendication 1, **caractérisée en ce que** la membrane « track-etched » fonctionnalisée par radiogreffage est utilisée comme nanofiltres à diamètre variable.

5. Méthode selon l'une quelconque des revendications précédentes, **caractérisée en ce qu'**elle comprend une étape qui consiste à faire varier le voltage dans une fourchette de moins de cinq volts.

6. Méthode selon l'une quelconque des revendications précédentes, **caractérisée en ce que** la modification de l'hydrophobie est réversible avec la différence de potentiel variable.
